# EUROPEAN PATENT APPLICATION

(11) **EP 3 794 960 A1**
(43) Date of publication of application: **24.03.2021**
(21) Application number: 19315114.9
(22) Date of filing: 18.09.2019
(51) Int. Cl.: A23L 29/219, A23L 7/113

(54) **HIGH ACETYLATED PEA STARCH FOR INSTANT NOODLES**

(71) Applicant: ROQUETTE FRERES, 62136 Lestrem (FR)
(72) Inventor: ITO, Goichi, Tokyo, 184-0014 (JP)
(74) Representative: Plasseraud IP

(57) **Abstract**

The invention is related to the of a wheat flour based instant noodle, containing acetylated pea starch, characterized in that the acetylated pea starch used for their preparation is high acetylated pea starch.

## Description

The present invention provides wheat flour based instant noodles, containing acetylated pea starch, wherein the acetylated pea starch is a high acetylated pea starch.

The present invention relates also to their related process of preparation.

### State of the art

The popularity of Asian noodles is increasing around the world, and the introduction of noodle products made from whole grain flour is considered as an effective way to modify customer's dietary pattern and promote high - fiber food consumption.

Instant noodles were first introduced commercially in Japan in 1958 and from there the product rapidly spread to Korea and other Asian countries.

Today, instant noodles are consumed in more than 80 countries and of the many types of noodles, instant noodles are the fastest growing sector due to their ease in preparation and convenience.

Instant noodles are different from other noodles by virtue of additional processing steps of steaming, frying or drying. These products can either be steamed and dried (instant dry noodle) or steamed and fried (instant fried noodle).

Starch is widely used in food and industrial applications as a thickener, colloidal stabilizer, gelling agent, bulking agent and water retention agent.

To achieve desirable noodle texture, starch is incorporated at levels of 5-20% of flour weight. In other words between 5 to 20 % of the wheat flour is replaced by starch.

There are two main categories of starch, namely native starch and modified starch.

Native starches (potato and tapioca) are less preferred by manufacturers due to their lack of stability under high temperature, shear, pH and refrigeration commonly applied during food processing. Such harsh conditions may lead to undesirable changes in product texture.

To overcome these problems, modified starches (for example acetylated starch) have been widely used. The advantages of acetylated starches are their low gelatinization temperature, high swelling and solubility as well as stability under freeze-thaw conditions.

Research on rice starch has indicated that acetylation increases solubility, swelling power and viscosity but decreases gelatinization temperature. Similar conclusions were drawn for acetylated starches from cassava.

It was also found that acetylated potato starch could be used to enhance noodles elasticity. In particular it was observed in white salted noodles (Japanese noodles) formulations, when up to 20% of wheat flour was replaced with acetylated potato starches (prepared from potato or sweet potato), that cooking loss (*i.e.* shrinkage of noodles during cooking) decreases, while the softness, stretchability and slipperiness increases significantly.

Using acetylated starch or hydroxypropylated starch for Instant noodles is common knowledge. Nowadays, most of the instant noodles manufacturers are using acetylated potato or acetylated tapioca starch as starch ingredients for their instant noodle.

Thus, in order to prepare wheat flour based noodles with good elastic texture, man skilled in the art will use modified potato starch.

However, the wheat flour based instant noodle made with modified potato starch shows sticky surface during the production process. Due to the stickiness of noodle surface, noodle strings bind each other and prevent successes of drying process. In order to prevent the sticking of slit noodle strings, it is needed to use additional ingredients or a specific process.

To remedy to all these encountered difficulties, the solution that is proposed by the present invention is to use acetylated pea starch, and more particularly a high acetylated pea starch.

### Summary of the invention

The invention relates to wheat flour based instant noodles, containing high acetylated pea starch.

The high acetylated pea starch of the invention is characterized by its acetyl value above 1.5 %, preferably between 1.8 and 2.5 %, and a substitution degree above 0.07, preferably between 0.07 to 0.09.

The wheat flour based instant noodles so obtained are characterized in that the high acetylated pea starch used for their preparation shows a gelatinized temperature compared to that of native pea starch decreased from 5.0 to 6.0°C.

### Brief Description of Drawings

Other features, details and advantages will be shown in the following detailed description and on the figures, on which:
- Figure 1 is Water uptake of Instant noodle
- Figure 2 is Comparison of starch texture
- Figure 3 is Distribution of weight of end-products

### Detailed description of the invention

The invention relates to the use of high acetylated pea starch for the preparation of wheat flour based instant noodles.

In order to produce wheat flour based instant noodles with good elastic texture, noodles producers typically use potato starch, especially acetylated potato starch. Indeed, without modified potato starch, the wheat flour based instant noodles do not show the required elastic texture. For example, the use of native or modified tapioca starch does not enable to get noodles with good elastic texture.

However, as previously said, the wheat flour based instant noodles, comprising modified potato starch, show sticky surface during their production process.

It even appears that this stickiness observed during the drying process is larger with noodles comprising potato starch than with noodles comprising other types of starches.

In order to propose new starch that could advantageously replace potato modified starch in the preparation of wheat based instant noodles, the applicant has carried out numerous experiments.

Starch modification is a classical way to alter the structure of starch, and usually exert a major change on a desirable physical property.

Nevertheless, even low levels of modification are able to dramatically alter the physical properties of starch, such as paste viscosity, gelling, syneresis, clarity, adhesion and emulsifying properties.

Cross-linked starches offer acid, heat and shear stability over their parent native starches.

Stabilization of starch aims for example to prevent retrogradation by introducing substituent groups. The interactions of glucan chains in the starch granule are weakened by the introduction of the substituents and, consequently, hydration and gelatinization of starch by cooking is achievable at lower temperatures.

The effectiveness of stabilization depends upon the number and nature of the substituent groups. Acetylation and hydroxypropylation are the primary food-approved types of stabilization.

Among a great variety of starch esters, starch acetate is the one that is actively marketed.

The maximum level of 2.5 % acetyl for food use corresponds to a DS value of 0.1.

The steric disturbance of the acetyl group will facilitate, improve starch solubilization by lowering the energy level of the network created by the hydrogen bonds, and will slow down the retrogradation.

The starch-starch interactions in the granule are weakened by the introduction of acetyl groups and, consequently, hydration and gelatinization by cooking is achievable at lower temperatures.

Such starches benefit from easy cooking and are particularly useful in low moisture environments and in applications where the moisture level is restricted by competition from co-ingredients, e.g. in extruded and coated snacks, frozen fish and cooked meat products, flour based noodles, bakery products and in various frozen or cold stored ready-to-eat menus.

The acetyl group also generates a hydrophobic type of structure suitable for certain applications, including acid pH-resistant binders in the food industry, and adhesive and greave resistance in paper sizing.

Starch acetates are readily prepared by reacting the starch with acetic anhydride in the presence of diluted sodium hydroxide. Alternatively, vinyl acetate can be used for acetylation in aqueous suspension in the presence of sodium carbonate as catalyst.

In the present invention, the applicant has decided to test various acetylation levels of pea starch to try to substitute efficiently potato starch.

The applicant has found that to do so, there are two important parameters to take into account:
- The content of amylose of this particular starch; and
- its gelatinized temperature.

On the first point, as potato starch contains 20 % of amylose, the pea starch with its 35 % of amylose content is the best choice.

On the second point, as the gelatinized temperature of potato starch is lower than the one of pea starch, the applicant has decided to choose a particular modified pea starch, and more particularly a high acetylated modified pea starch.

All the difficulties are indeed based on the choice of the appropriate level of modification, able to satisfy this condition.

The applicant has found also that the level of modification has to decrease the gelatinized temperature of pea starch, and notably that its value has to be advantageously decreased from 5 to 6.0 °C compared to the gelatinized temperature of the native pea starch.

To determine this parameter, four acetylated pea starches were tested, 4 acetylated pea starches commercialized by the applicant under the trademark:
∘ CLEARAM® LG0005
   ▪ Acetyl value: 0.32
   ▪ Substitution Degree: 0.012
   ▪ Gelatinization temperature: 72.95°C
∘ CLEARAM® LG0008
   ▪ Acetyl value: 0.82
   ▪ Substitution Degree: 0.031
   ▪ Gelatinization temperature: 68.9°C
∘ CLEARAM® LG0020
   ▪ Acetyl value: 1.9
   ▪ Substitution Degree: 0.071
   ▪ Gelatinization temperature:67.9°C
∘ CLEARAM® LG0025
   ▪ Acetyl value: 2.23
   ▪ Substitution Degree: 0.084
   ▪ Gelatinization temperature: 67.45°C

As a comparison, the gelatinized temperature of native pea starch is around 73.4°C (value determined by analysis of the standard RVA profiles of these respective starches).

In this invention, the applicant has mainly observed three important points:
1. Modified pea starch can replace modified potato starch without changing its elastic unique texture;
2. Modified tapioca starch cannot advantageously replace modified potato starch;
3. Modified pea starch can reduce the error, the issue of production process during drying process, compared with modified potato starch, and improves production handling.

In this way, as it will be exemplified, wheat flour based instant noodles were prepared.

It was confirmed that the wheat flour based noodles with modified potato starch have unique, good elasticity and the wheat flour based noodles with modified show similar elasticity

The elasticity is typically measured using a Texture Analyzer Shimadzu EZ-SX.

On the contrary wheat flour based noodles with modified tapioca starch do not show such elasticity.

Furthermore the successfulness of drying process was confirmed by checking the weight of end product, based on the fact that if the weight of end product has big standard deviation, it indicates instability of drying process (instability caused by over stickiness of the surface of noodle strings).

It was finally found that the use of high acetylated pea starch, i.e. characterized by :
- its acetyl value above 1.5 %, preferably between 1.8 and 2.5 %, and a
- substitution degree above 0.07, preferably between 0.07 to 0.09.
and which was modified in order to decrease its gelatinization temperature around 5.0 to 6°C, enables to get wheat flour based noodles with improved texture and improved stability during the drying process.

The invention also relates to a process of producing wheat based instant noodles comprising the step of adding the acetylated pea starch as described above, notably at levels of 5-20% of flour weight.

This invention will be better understood in light of the following examples which are given for illustrative purposes only and do not intend to limit the scope of the invention, which is defined by the attached claims.

### EXAMPLES

The ingredients tested were the following:
- Wheat flour commercialized by NISHIN flour mills with Protein content 10-12%, Ash content 0.32 - 0.36%;

### Starches:

- Native tapioca starch commercialized by UNITED FOODSTUFF CO OTE LTD
- Acetylated tapioca starch, commercialized by MATSUTANI under the trademark
   ∘ SAKURA®
      ▪ Acetyl value: 0.52
      ▪ Substitution Degree: 0.020
      ▪ Gelatinization temperature: 69.95°C
   ∘ SAKURA®2
      ▪ Acetyl value: 1.73
      ▪ Substitution Degree: 0.065
      ▪ Gelatinization temperature:67.0°C
- Native pea starch, commercialized by the applicant under the trademark: Pea starch N-735:
   ▪ Gelatinization temperature: 73.4°C
- Acetylated pea starch, commercialized by the applicant under the trademark:
   ∘ CLEARAM® LG0005
      ▪ Acetyl value: 0.32
      ▪ Substitution Degree: 0.012
      ▪ Gelatinization temperature: 72.95°C
   ∘ CLEARAM® LG0008
      ▪ Acetyl value: 0.82
      ▪ Substitution Degree: 0.031
      ▪ Gelatinization temperature: 68.9°C
   ∘ CLEARAM® LG0020
      ▪ Acetyl value: 1.9
      ▪ Substitution Degree: 0.071
      ▪ Gelatinization temperature:67.9°C
   ∘ CLEARAM® LG0025
      ▪ Acetyl value: 2.23
      ▪ Substitution Degree: 0.084
      ▪ Gelatinization temperature: 67.45°C
- Native potato starch, commercialized by the applicant:
   ▪ Gelatinization temperature: 66,5°C
- Native potato starch HV, commercialized by the applicant.
   ▪ Gelatinization temperature: 6645°C
- Acetylated potato starch, commercialized by the applicant under the trademark:
   ∘ CLEARAM® PG06
      ▪ Acetyl value: 0.67
      ▪ Substitution Degree: 0.025
      ▪ Gelatinization temperature: 64.5°C
   ∘ CLEARAM® PGHV05
      ▪ Acetyl value: 0.63
      ▪ Substitution Degree: 0.024
      ▪ Gelatinization temperature: 63.95°C
   ∘ CLEARAM® PGHV
      ▪ Acetyl value: 1.64
      ▪ Substitution Degree: 0.062
      ▪ Gelatinization temperature: 60.75°C

The recipes tested are the following:

| | Recipe (in grams) | | | | | | |
|---|---|---|---|---|---|---|---|
| | Control CTR | Native Potato | HV Potato | PGHV05 | PG06 | PGHV | LG0020 |
| A: Wheat flour | 995 | 845 | 845 | 845 | 845 | 845 | 845 |
| A: native potato starch | | 150 | | | | | |
| A: native potato starch HV | | | 150 | | | | |
| A: CLEARAM® PGHV05 | | | | 150 | | | |
| A: CLEARAM PG06 | | | | | 150 | | |
| A, CLEARAM® PGHV | | | | | | 150 | |
| A, CLEARAM® LG0020] | | | | | | | 150 |
| A: Garlic powder | 5 | 5 | 5 | 5 | 5 | 5 | 5 |
| Sub-total | 1000 | 1000 | 1000 | 1000 | 1000 | 1000 | 1000 |
| B: Salt | 20 | 20 | 20 | 20 | 20 | 20 | 20 |
| B : Kansui [Sodium tripolyphosphate+ Sodium p^{y}rophosphate] | 2 | 2 | 2 | 2 | 2 | 2 | 2 |
| B: Vitamin E | 0.5 | 0.5 | 0.5 | 0.5 | 0.5 | 0.5 | 0.5 |
| B: Water | 340 | 340 | 340 | 340 | 340 | 340 | 340 |
| Total | 1358.3 | 1358.3 | 1358.3 | 1358.3 | 1358.3 | 1358.3 | 1358.3 |

| | Recipe (in grams (g)) | | | | | |
|---|---|---|---|---|---|---|
| | LG0025 | Native Tapioca | Low acetylated tapioca SAKURA® | High acetylated tapioca SAKURA® 2 | Native Pea N-735 | LG0005 |
| A: Wheat flour | 845 | 845 | 845 | 845 | 845 | 845 |
| A: CLEARAM® LG0025 | 150 | | | | | |
| A: Native Tapioca | | 150 | | | | |
| A: SAKURA® | | | 150 | | | |
| A, SAKURA®2 | | | | 150 | | |
| A, native pea starch N-735 | | | | | 150 | |
| A, CLEARAM® LG0005 | | | | | | 150 |
| A: Garlic powder | 5 | 5 | 5 | 5 | 5 | 5 |
| Sub-total | 1000 | 1000 | 1000 | 1000 | 1000 | 1000 |
| B: Salt | 20 | 20 | 20 | 20 | 20 | 20 |
| B : Kansui [Sodium tripolyphosphate+ Sodium pyrophosphate] | 2 | 2 | 2 | 2 | 2 | 2 |
| B: Vitamin E | 0.5 | 0.5 | 0.5 | 0.5 | 0.5 | 0.5 |
| B: Water | 340 | 340 | 340 | 340 | 340 | 340 |
| Total | 1358.3 | 1358.3 | | 1358.3 | | |

Seasoning recipe: (Added to all the above-mentioned recipes)

| | |
|---|---|
| C: Salt (g) | 4 |
| C: MSG (g) | 1.5 |
| C: Water (g) | 100 |
| Total (g) | 105.5 |

The preparation conditions are the following:
- Mix seasoning recipe, "C", to make seasoning.
- Heat the seasoning to dissolve all ingredients.
- Mix recipe "B" to make liquid phase.
- Mix "A" well, and add "B" into powder mixture "A" and mix for 10 min at 139 rpm.
- Compose the dough as 8 mm gap for 3 times, by using rolling machine.
- Mature the sheeted dough for 30min at room temperature.
- Roll as below condition to make noodle sheet.
- 8mm => 6.5mm => 4mm => 3mm => 2mm => 1.3mm => 1.1 mm
- And cut 1.25mm wide.[#24 cutter]
- Put 70g separated noodle into a colander.
- Steam for 2 min 15 sec at 98°C.
- Mix with 25 g pre-heated seasoning "C" well.
- Pack into the mould and deep fry for 2min 30 sec at 150°C

### Analysis methods

### Water absorption

In order to confirm the difference of water absorption, the changing of the weight and the initial water content of sample are measured.
1. Measure the weight of instant noodle and water content.
2. Initiate rehydration of instant noodle with hot water.
3. Measure the instant noodle weight by designated timing, and calculate changing of weight.

### Texture analyzer

1. Put noodle in a cup, and pour 500ml of boiled water.
2. Wait 3min.
3. Measure texture by using Texture Analyzer Shimadzu EZ-SX

We tested by two ways.

**[TEST1]**

| | |
|---|---|
| Condition: | Plunger: Knife shape chip |
| Speed: 3mm/min | Sample size: 1 string |

**[TEST2]**

| | |
|---|---|
| Condition: | Plunger: Pull type attachment |
| Speed: 3mm/sec | Sample size: 4cm 1string |

### Results

### Effect of modified pea starch on water uptake during instant noodle cooking

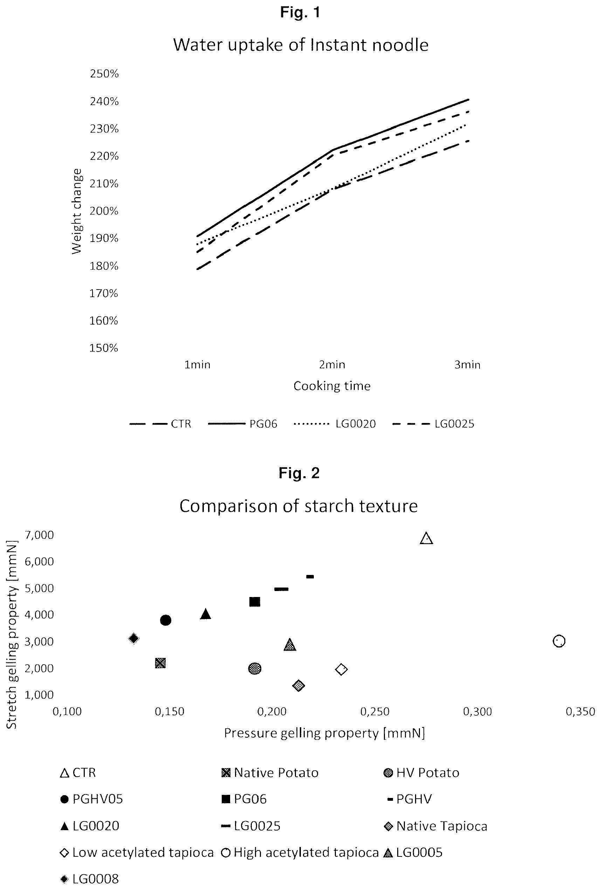

The results are presented in Fig. 1.

The water uptake of acetylated pea starch is slightly better than the control CTR. However, it can be seen that the level of acetylation for pea starch has positive effect on water uptake. Indeed, CLEARAM® LG0025 (with an acetyl value: 2,23 % and a substitution Degree: 0,084) showed good water uptake capacity, compared to the reference usually used, i.e. less acetylated potato starch, i.e. CLEARAM® PG06 (with an acetyl value: 0.67 % and a substitution Degree: 0.025).

### Effect of modification of starch on texture

The texture comparison by using "knife shape chip" are presented in the following tables.

| | CTR | Native Potato | LG0005 | LG0008 | HV Potato | PGHV05 | PG06 |
|---|---|---|---|---|---|---|---|
| Hardness [N] | 0.175 | 0.106 | 0.155 | 0.111 | 0.120 | 0.120 | 0.121 |
| Elasticity [mm] | 1.571 | 1.365 | 1.345 | 1.191 | 1.591 | 1.231 | 1.575 |
| Pressure gelling property [mmN] | 0.274 | 0.145 | 0.208 | 0.132 | 0.191 | 0.147 | 0.191 |

| | CTR | PGHV | LG0020 | LG0025 | Native Tapioca | Low acetylated tapioca | High acetylated tapioca |
|---|---|---|---|---|---|---|---|
| Hardness [N] | 0.175 | 0.120 | 0.135 | 0.150 | 0.170 | 0.158 | 0.222 |
| Elasticity [mm] | 1.571 | 1.797 | 1.233 | 1.359 | 1.251 | 1.476 | 1.529 |
| Pressure gelling property [mmN] | 0.274 | 0.216 | 0.167 | 0.204 | 0.212 | 0.233 | 0.339 |

The texture comparison by using "knife shape chip" are presented in the following tables.

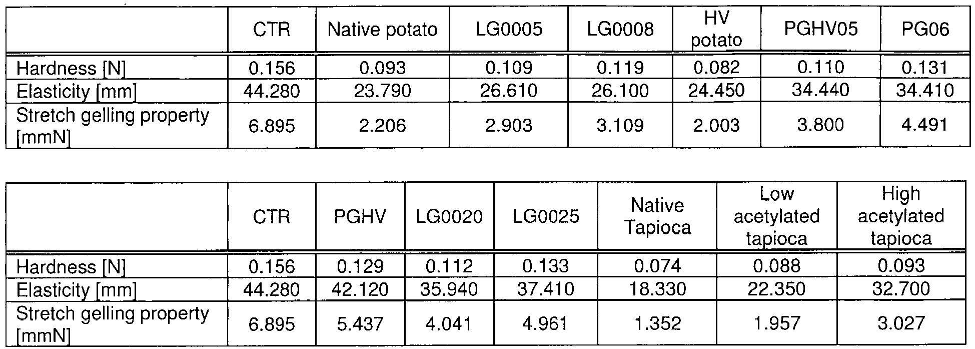

The comparison of starch texture is presented in Fig. 2 and in the following tables.

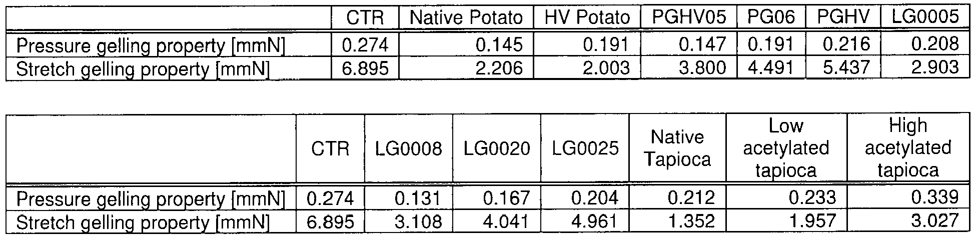

It appears that the texture of noodles with LG0020 and LG0025 are similar to those with PGHV05, PG06 and PGHV.

### Distribution of weight of end products

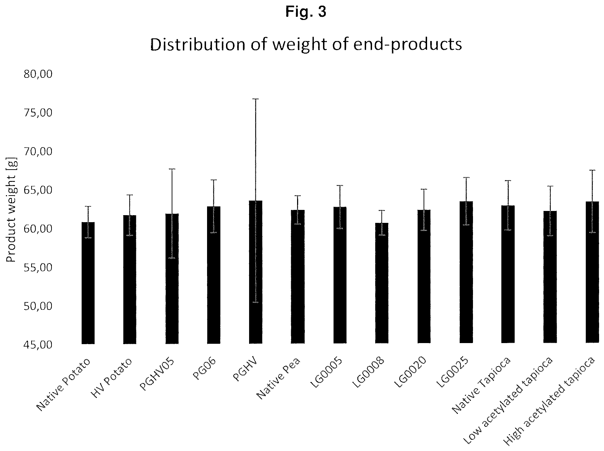

The results are presented in the Fig. 3 and in the following tables (values in grams (g)

| Native Potato | HV Potato | PGHV05 | PG06 | PGHV | Native Pea | LG0005 | LG0008 | LG0020 | LG0025 |
|---|---|---|---|---|---|---|---|---|---|
| 61.5 | 62.47 | 59.13 | 62.28 | 51.49 | 62.5 | 60.88 | 61.724 | 63.9 | 63.57 |
| 59.96 | 62.85 | 58.79 | 61.02 | 55.94 | 62.25 | 63.39 | 60.459 | 65.06 | 62.53 |
| 60.78 | 63.1 | 60.01 | 64.13 | 67.49 | 61.52 | 61.66 | 60.002 | 62.58 | 61.78 |
| 59.47 | 63.25 | 63.86 | 64.46 | 67.96 | 61.79 | 62.38 | 61.243 | 62.49 | 64.49 |
| 61.13 | 60.61 | 60.83 | 60.88 | 63.65 | 62.47 | 60.92 | 61.246 | 61.3 | 65.8 |
| 62.87 | 59.81 | 66.81 | 64.15 | 64.27 | 61.29 | 61.83 | 59.945 | 62.96 | 65.12 |
| 60.49 | 61.15 | 61.39 | 61.12 | 67.2 | 64.23 | 63.78 | 59.332 | 61.54 | 62.06 |
| 60.81 | 60.84 | 64.73 | 64.9 | 70.66 | 62.91 | 63.58 | 60.193 | 61.7 | 62.16 |
| | | | | | | 64.37 | 61.563 | 61.23 | |
| | | | | | | 64.67 | 61.143 | 60.75 | |

| Native Tapioca | Low acetylated tapioca | High acetylated tapioca | | | | | | | |
|---|---|---|---|---|---|---|---|---|---|
| 62.03 | 61.17 | 62.92 | | | | | | | |
| 61.88 | 62.23 | 65.03 | | | | | | | |
| 65.81 | 61.83 | 63.53 | | | | | | | |
| 64.58 | 60.42 | 66.36 | | | | | | | |
| 62.21 | 62.71 | 61.85 | | | | | | | |
| 61.53 | 62.11 | 63.06 | | | | | | | |
| 61.5 | 65.62 | 60.2 | | | | | | | |
| 63.63 | 59.77 | 60.85 | | | | | | | |
| | 62.92 | 64.63 | | | | | | | |
| | 62.94 | 65.51 | | | | | | | |

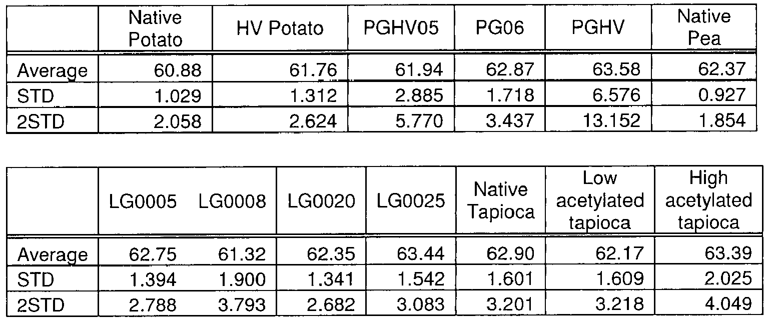

The distribution of weight of end product is important for the instant noodle manufacture.

In the factory, weight checker located before packaging machine is a gate keeper to exclude non-dried product.

Therefore making product with constant weight relates to high yield production.

In this study, it is observed that the product, CLEARAM® LG0020 and CLEARAM® LG0025 show better stability of weight of end product, compare with CLEARAM® PGHV05 and CLEARAM® PGHV, which show similar texture.

Therefore, it is showed that to make wheat flour based instant noodle, such acetylated pea starch provide similar texture to that of acetylated potato starch, and may be preferred because of its improving of the production efficiency.

## Claims

1. Wheat flour based instant noodles, containing acetylated pea starch, **characterized in that** the acetylated pea starch used in the preparation of said noodles is a high acetylated pea starch.

2. The noodles of claim 2, **characterized in that** the acetyl value of the low acetylated pea starch is above 1.5 %.

3. The noodles of claim 2, **characterized in that** characterized the acetyl value of the low acetylated pea starch is between 1.8 and 2.5 %

4. The noodle of anyone of claims 1 to 3, **characterized in that** the high acetylated pea starch shows a gelatinized temperature decreased from 5.0 to 6.0 °C compared to the gelatinized temperature of the native pea starch.
